(19) Europäisches Patentamt / European Patent Office / Office européen des brevets

(11) **EP 3 552 973 B1**

(12) **EUROPEAN PATENT SPECIFICATION**

(45) Date of publication and mention
of the grant of the patent:
**24.06.2020 Bulletin 2020/26**

(21) Application number: **19168198.0**

(22) Date of filing: **09.04.2019**

(51) Int Cl.:
*G01S 17/48* (2006.01)   *G01S 17/89* (2020.01)
*B64D 47/02* (2006.01)   *B64D 47/08* (2006.01)
*B64F 1/00* (2006.01)   *G01S 17/93* (2020.01)

(54) **OBJECT RANGING BY COORDINATION OF LIGHT PROJECTION WITH ACTIVE PIXEL ROWS OF MULTIPLE CAMERAS**

OBJEKTABSTANDSMESSUNG DURCH KOORDINATION DER LICHTPROJEKTION MIT AKTIVEN PIXELZEILEN MEHRERER KAMERAS

TÉLÉMÉTRIE D'OBJET PAR LA COORDINATION DE PROJECTION DE LUMIÈRE AVEC RANGÉES DE PIXELS ACTIVES DE PLUSIEURS CAMÉRAS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.04.2018 US 201815949713**

(43) Date of publication of application:
**16.10.2019 Bulletin 2019/42**

(73) Proprietor: **ROSEMOUNT AEROSPACE INC.**
**Burnsville, MN 55306-4898 (US)**

(72) Inventors:
• **RUTKIEWICZ, Robert**
**Edina, MN Minnesota 55410 (US)**
• **ELL, Todd**
**Savage, MN Minnesota 55378 (US)**
• **PESIK, Joseph T.**
**Eagan, MN Minnesota (US)**

(74) Representative: **Dehns**
**St. Bride's House**
**10 Salisbury Square**
**London EC4Y 8JD (GB)**

(56) References cited:
**EP-A1- 3 235 735**   **EP-A1- 3 446 984**
**EP-A2- 1 408 702**   **WO-A1-2006/048857**

**Description**

**BACKGROUND**

Each year, significant time and money are lost due to commercial aircraft accidents and incidents during ground operations, of which significant portions occur during taxiing maneuvers. During ground operations, aircraft share the taxiways with other aircraft, fuel vehicles, baggage carrying trains, mobile stairways and many other objects. Aircrafts often taxi to and/or from fixed buildings and other fixed objects. Should an aircraft collide with any of these objects, the aircraft must be repaired and recertified as capable of operation. The cost of repair and recertification, as well as the lost opportunity costs associated with the aircraft being unavailable for use can be very expensive.

Pilots are located in a central cockpit where they are well positioned to observe objects that are directly in front of the cabin of the aircraft. Wings extend laterally from the cabin in both directions. Some commercial and some military aircraft have large wingspans, and so the wings on these aircraft laterally extend a great distance from the cabin and are thus positioned behind and out of the field of view of the cabin. Some commercial and some military planes have engines that hang below the wings of the aircraft. Pilots, positioned in the cabin, can have difficulty knowing the risk of collisions between the wingtips and/or engines and other objects external to the aircraft. An aircraft on-ground collision alerting system would be useful to survey the area forward or aft of the tail, wingtips and/or engines, to detect obstructions in a potential collision path, and to provide visual and audible alerts to the cockpit.

**SUMMARY**

Apparatus and associated methods relate to a system for ranging an object in a scene external to an aircraft. The system includes a light projector configured to be mounted at a projector location on the aircraft, and further configured to project linearly-patterned light in a controllable direction onto the scene external to the aircraft, thereby illuminating a linear-patterned portion of the scene. The system includes first and second cameras configured to be mounted at first and second distinct camera locations on the aircraft and aligned so as to be able to simultaneously capture, when the linear-patterned light is projected onto the scene, first and second vectors of pixel data corresponding to active first and second rows or first and second columns of pixels, respectively, upon which the linear-patterned light projected by the light projector and reflected by the scene is focused. The system includes a controller configured to coordinate the controllable direction of the projected linearly-patterned light so that the illuminated linearly-patterned portion of the scene is focused onto the active first and second rows or the first and second columns of pixels. The system also includes a range calculator configured to calculate range to the object using triangulation based on the captured first and second vectors of pixel data and the first and second distinct camera locations from which the first and second vectors of pixel data are simultaneously captured. EP 3 235 735 A1 discloses apparatus and associated methods which relate to ranging an object nearby an aircraft by triangulation of spatially-patterned light projected upon and reflected from the object.

Some examples relate to a method for ranging an object in a scene external to an aircraft. The method includes projecting, from a light projector mounted at a projector location on the aircraft, linearly-patterned light in a controllable direction onto the scene external to the aircraft. The method includes simultaneously capturing, via two cameras mounted to the aircraft at from two distinct locations, first and second vectors of pixel data corresponding to active first and second rows or first and second columns of pixels, respectively, upon which the linearly-patterned portion of the scene is focused when the linearly-patterned light is projected onto the scene. The method includes coordinating the controllable direction of the projected linearly-patterned light so that the illuminated linearly-patterned portion of the scene is focused onto the active first and second rows or the first and second columns of pixels. The method includes calculating, using triangulation based on the captured first and second vectors of pixel data and the first and second distinct camera locations from which the first and second vectors of pixel data are simultaneously captured, range to the object. The method also includes generating an output signal indicative of the calculated range.

From a further aspect, which the Applicant expressly reserves the right to claim, the invention provides a method for ranging an object in a scene external to an aircraft, the method comprising:

projecting, from a light projector mounted at a projector location on the aircraft, linearly-patterned light in a controllable direction onto the scene external to the aircraft;
simultaneously capturing, via two cameras mounted to the aircraft from two distinct locations, first and second vectors of pixel data corresponding to active first and second rows or first and second columns of pixels, respectively, upon which the linearly-patterned portion of the scene is focused when the linearly-patterned light is projected onto the scene;
coordinating the controllable direction of the projected linearly-patterned light so that the illuminated linearly-patterned portion of the scene is focused onto the active first and second rows or the first and second columns of pixels;
calculating, using triangulation based on the captured first and second vectors of pixel data and the first and second distinct camera locations from which the first and second vectors of pixel data are simultaneously captured, range to the object; and

generating an output signal indicative of the calculated range.

The method may optionally further comprise:
identifying first and second illumination patterns in the first and second vectors of pixel data, respectively, the identified first and second illumination patterns indicative of a discontinuity in range between the object in the scene and a background of the scene.

The method may optionally further comprise:
determining, based on the identified first and second illumination patterns, first and second pixel coordinates, respectively, corresponding to an edge of object in the scene.

The method may optionally further comprise:
calculating, using triangulation based on the determined first and second pixel coordinates and the first and second distinct camera locations from which the first and second vectors of pixel data are simultaneously captured, range to the object.

The method may optionally further comprise:
generating an alert signal if the calculated range to the object is within a collision zone or on a collision trajectory.

## BRIEF DESCRIPTION OF THE DRAWINGS

FIG. 1 is a schematic view of an exemplary object ranging system used by an aircraft during on-ground operations.

FIGS. 2A-2B are sub-image portions of images or zoomed-in images simultaneously captured by the two cameras located at distinct locations on the aircraft depicted in FIG. 1.

FIGS. 3A-3B are graphs depicting a relation between image coordinates and angle to object imaged at the image coordinates.

FIG. 4 is a schematic diagram depicting triangulation ranging using image data from simultaneously-captured images.

FIG. 5 is a schematic diagram depicting an embodiment of an object range sensor having light projector and two cameras located on a shared transverse axis.

FIG. 6 is a schematic diagram depicting a three camera embodiment of an object range system.

FIGS. 7A-7D are schematic diagrams depicting various projected beams from a two-dimensionally distributed camera/projector embodiment of an object range system.

FIG. 8 is a block diagram of an embodiment of an object ranging system.

FIG. 9 is a block diagram of an embodiment of an object ranging system.

## DETAILED DESCRIPTION

Apparatus and associated methods relate to ranging an object in a scene external to an aircraft. A light projector and two cameras are mounted on the aircraft, the cameras at two locations distinct from one another. The light projector and the two cameras are coordinated so that the light projector projects a linear-patterned beam of light while the cameras simultaneously capture a vector of image data corresponding to an active row or column of pixels upon which a linear-patterned beam of light projected by the light projector and reflected by the scene is focused. Range to the object is calculated using triangulation based on the captured rows or columns of image data and the distinct locations of the two cameras from which the image data are simultaneously captured.

A linearly-patterned beam of light is one that has a large ratio of beam dimensions in orthogonal directions transverse to the direction of propagation, thereby projecting a substantially planar beam. For example, if a light projector projects a light beam in a direction parallel with a level ground surface and the light beam has a large azimuthal dimension and a small elevational dimension, such a beam illuminates a portion of a scene intercepted by the substantially planar beam. The illuminated portion of the scene can be referred to as a horizontal line of illumination if the ratio between the azimuthal dimension and the elevational dimension is much greater than the elevational dimension. For example, if the ratio of the azimuthal dimension to the elevational dimension is greater than 50:1, 100:1, 200:1 or more, than the illuminated are is substantially linear. Similarly, if the light projector projects a light beam in a direction parallel with a level ground surface and the light beam has a small azimuthal dimension and a large elevational dimension, such a beam again illuminates a rectangular area of a screen normal to the projection direction. But in this scenario, the illuminated rectangular area can be called a vertical line of illumination if the ratio between the elevational dimension and the azimuthal dimension is much greater than the elevational dimension.

In some embodiments the camera is operated using a rolling-mode shutter, in which a single row or column is exposed for a time period. The row or column that is being exposed is called the active row, which designates that the row is made capable of converting optical energy incident thereon into electrical signals indicative of the light incident optical energy. Then another single row or column is exposed for another time period. A sequence of rows or columns of image data can be acquired in this manner.

The projection of linearly-patterned light can be synchronized with the exposure of a corresponding row or column of light-sensitive pixels using such a rolling-mode shutter. The linearly-patterned light can be projected upon a portion of the scene in a direction that results in reflections therefrom that are focused upon the active row or column of each of the cameras. Illuminating only the portion of the scene from which reflected light is focused upon the active row or column can reduce or minimize the power consumption required for illumination or can maximize a range of illumination. By illuminating only the portion of the scene captured by the active rows or columns of the cameras, the projector energy can be reduced and/or the illumination range can be increased.

A two-dimensional projector-illuminated image can be created by abutting or concatenating a sequence of row or column image data - the row or column images that capture the reflected pulses of linearly-patterned light. In some embodiments, alternate images of the scene can be obtained with and without artificial illumination by the light projector. A two-dimensional natural-light image can be obtained in the same manner as the projector-illuminated image, except without illumination. Such a natural-light image can be used in conjunction with the projector-illuminated image. A difference image can be calculated by taking the difference between the projector-illuminated image and the natural-light image. Such a difference image can be used to help isolate the reflections of the linearly-patterned light, by removing persistent sources of light (e.g., sunlight or artificial illuminations).

The simultaneously captured rows or columns of image data obtained by the two cameras can be correlated to one another so as to identify imaged features common to both sets of row or column image data. The correlated features can correspond to an object from which reflected light created the correlated image features simultaneously obtained by both cameras. By performing such image processing on a row-wise or column-wise basis instead of upon an entire two-dimensional image processing complexity and/or time can be reduced. Using the pixel coordinates corresponding to the correlated image features, range to the object that produced the correlated image feature can be determined. Triangulation can be used to calculate range of such objects using the pixel coordinates as indicia of angles of two triangle vertices and using camera locations to determine the triangle side between such vertices.

In some embodiments, a standard-contrast image in which light is integrated over an exposure time can be generated by the cameras. The standard-contrast images can be displayed on a cockpit display device, for example, and annotated with location(s) and/or range(s) of objects external to the aircraft as calculated by the row or column image data. Standard images can be used in conjunction with the images to identify pixel boundaries of the object and to calculate range values of portions of the object corresponding to pixels imaging the linearly-patterned light projected onto the scene.

For pixels not imaging reflections of the linearly-patterned light, range can be calculated using one or more calculated ranges corresponding to nearby pixels imaging the linearly-patterned light reflected from the object. Using these two ranging techniques provides pixel level resolution of trajectory and/or range data, while requiring only sparse illumination of objects by linearly-patterned light.

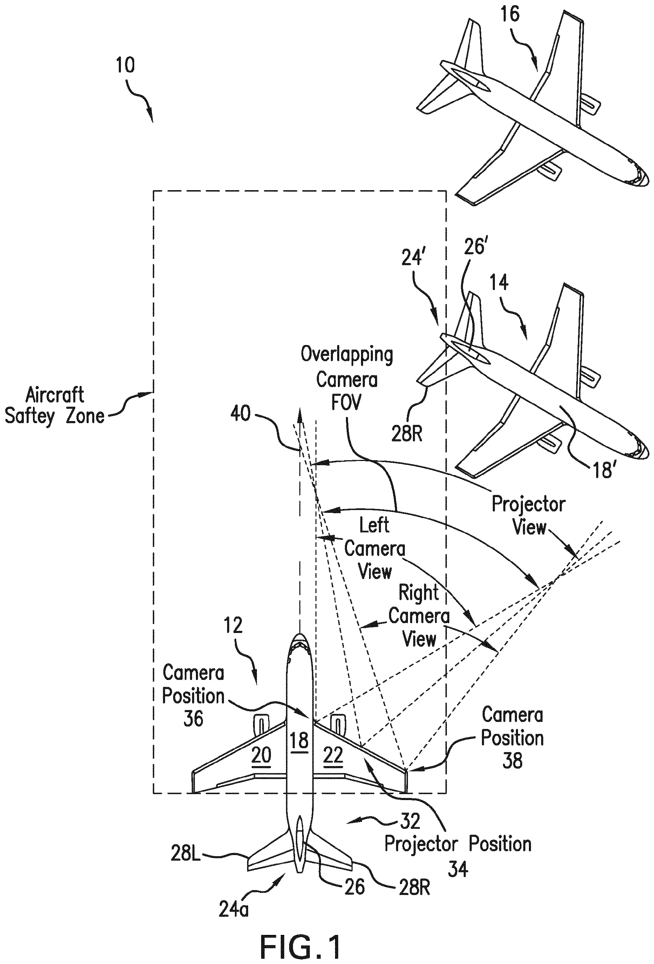

FIG. 1 is a schematic view of an exemplary object ranging system used by an aircraft during on-ground operations. In FIG. 1, aircraft taxi scenario 10 includes taxiing aircraft 12 and two parked aircraft 14 and 16. Taxiing aircraft 12 has fuselage 18, left wing 20, right wing 22 and tail 24. Tail 24 has vertical stabilizer 26 and horizontal stabilizers 28L and 28R. Taxiing aircraft 12 is equipped with one embodiment of object ranging system 32. Object ranging system 32 includes light projector 34, and cameras 36 and 38 located on a common axis. In the depicted embodiment, light projector 34 is mounted between left-side camera 36 and right-side camera 38 on right wing 22 of taxiing aircraft 12. "Left-side" refers to the location of left-side camera 36 relative to light projector 34, and "right-side" refers to the location of right-side camera 38 relative to light projector 34. In the depicted embodiment, both left- and right-side cameras 36 and 38 are located on right wing 22 of taxiing aircraft 12, thereby detecting ranges of objects within the fields of view that are possible from right wing 22. In some embodiments, a second object ranging system can be deployed on left wing 20 of taxiing aircraft 12, so as to detect ranges of objects within the fields of view that are possible from left wing 20.

Light projector 34 is configured to project linearly-patterned light onto a scene external to taxiing aircraft 12, thereby illuminating a linearly-patterned portion of the scene including linearly-patterned portions of objects in the scene. Light projector 34 is configure to project a beam of light that is substantially coplanar with the axis along which light projector 34 and left- and right-side cameras 36 and 38 are aligned. Light projector 34 can be configured to scan or direct the beam of light in different directions. For example, the projected beam of light can be rotated about the alignment axis along which along which light projector 34 and left- and right-side cameras 36 and 38 are located. The rotation angle of projection is coordinated with the rows of pixels within left- and right-side cameras 36 and 38, which are actively capturing imagery. Light projector 34 can be mounted at various other locations on taxiing aircraft 12. Left- and right-side cameras 36 and 38 can also be mounted at various locations on taxiing aircraft. For example, cameras 36 and 38 need not be on left- and right-hand sides of light projector 34.

In the depicted embodiment, the fields of view for light projector 34, and left- and right-side cameras 36 and 38 have fields of view that overlap one another. Such a configuration of fields of view permit left- and right-side cameras 36 and 38 to simultaneously capture images containing the linearly-patterned light projected by light projector 34 and reflected by the scene. In some embodiments, left- and right-side cameras 36 and 38 can be coordinated so as to both zoom in on a portion of the scene so as to be able to simultaneously capture imagery of that zoomed-in portion of the scene. In the depicted embodiment, light projector 34 and left- and right-side cameras 26 and 38 are located in an approximately collinear fashion so as to facilitate coordination of illumination with active row or column image capture.

Light projector 34 projects the linearly-patterned light over an azimuthal angle of illumination. The linearly-patterned light can be used to illuminate objects that reside both within the azimuthal angle of illumination and at the elevation level of the projected linearly-patterned light. In the depicted embodiment, light projector 34 has an optical axis that is vertically coplanar with fuselage axis 40 of taxiing aircraft 12. Light projector 34 is shown illuminating objects that are within an azimuthal range of +/- 85 degrees of fuselage axis 40 of taxiing aircraft 12, and within an elevation range of a projection horizon of light projector 34. The elevation range of projection, for example, can be from about +3, +5, +10, +12, or +15 degrees to about -2, -5, -8, or -10 degrees of projection from a vertical location of light projector 34. In some embodiments, the solid angle of projection encompasses the wingtips of left wing 20 and right wing 22, as well as a plane extending forward of these wingtips parallel to fuselage axis 40.

In the depicted embodiment, light projector 34 is controllably directed to project the linearly-patterned light at an elevation commensurate with the active row or column of left- and right-side cameras 36 and 38, such that the linearly-patterned light projected by light projector 34 and reflected by the scene is focused onto the active rows or columns of left- and right-side cameras 36 and 38. Light projector 34 can be rotated about the common alignment axis along which light projector 34 and left- and right-side cameras 36 and 38 are aligned. Such illumination may use light of various wavelengths. For example, in some embodiments, infrared light, being invisible to humans, can be used to provide illumination of objects within the solid angle of illumination. Infrared light can advantageously be non-distractive to pilots and to other people upon whom the linearly-patterned light is projected.

In some embodiments, light having wavelengths within an atmospheric absorption band can be used. Careful selection of projector wavelength can permit the projector to compete less with the solar energy. There are, however, certain wavelengths where the atmospheric absorption is so great that both projector energy and solar energy are attenuated equally. White light is broadband such as the light emitted from the sun. Solar light has a maximum intensity falling in the visible light spectrum. The portion of sunlight that has wavelengths within the infrared spectrum is of lower intensity than the portion that has wavelengths in the visible band. And so, projected light having such infrared wavelengths need not compete as strongly with the sunlight. Using light having such infrared wavelengths can thereby permit reduced power levels in projecting linearly-patterned light. Atmospheric absorption bands can further reduce solar infrared illumination. For example, atmospheric absorption bands include infrared wavelengths of between about 1.35-1.4, 1.8-1.95, 2.5-2.9, and between 5.5-7.2 microns.

In some embodiments, the linearly-patterned light that is projected by light projector 34 has particular patterns or features that can be identified in images formed by cameras 36, 38. For example, the intensity of light can be varied along the long transverse dimension of the light beam. Using knowledge of the location of the cameras 36, 38 and the image regions within the two camera's images (e.g., pixel coordinates) corresponding to pixels upon which the particular pattern or feature is imaged can permit determination of a specific location of the object reflecting such a particular feature (e.g., using triangulation). For example, cameras 36 and 38 can be located on left- and right-hand ends of a wing of taxiing aircraft 12, and an image feature reflecting off of parked aircraft 14 can be focused on first pixel coordinates of the image captured by left-side camera 36 and focused on second pixel coordinates of the image captured by right-side camera 38. These pixel coordinates can be related to angles with respect to fuselage axis 40 that the image feature ray traces from the object (e.g., parked aircraft 16) to the cameras 36 and 38.

Light projector 34, for example, can project linearly-patterned light that includes a pattern of dashes or intensity variations along a transverse line projecting at an angle of elevation from light projector 34. For example, for a linearly-patterned beam of light oriented in the horizontal direction, as described above, if the intensity has a periodic variation in the azimuthal direction, the a screen would be illuminated in a dashed horizontal fashion. The horizontal line might be first projected at an angle of elevation of -3 degrees (i.e., directed below the parallel to the horizon). Left- and right-side cameras 36 and 38 would then each capture a row of image data, the row would be that row upon which light projected at that angle of elevation reflects from the scene and is focused. Then, light projector would project the linearly patterned light at an angle of elevation slightly above -3 degrees. Left- and right-side cameras 36 and 38 would then each capture another row of image data, the row corresponding to the new angle of elevation.

Each of the projected horizontal lines of light projected at different angles of elevation, when reflected from an object, will be imaged using a different row of pixels of left- and right-side cameras 36 and 38. Knowing the locations both left- and right-side cameras 36, 38, and knowing the locations within the row pixel data where a specific feature is simultaneously imaged can permit a determination of the range of the object from which the specific feature has been reflected.

Using the calculated range information, pilots who are taxiing aircraft 12 can be informed of any potential collision hazards within the scene illuminated by light projector 34. Pilots of taxiing aircraft 34 can steer aircraft 34 to avoid wingtip collisions and/or engine collisions based on the location and range information that is calculated by object ranging system 32.

Various configurations of object ranging systems that use image data from a single camera to calculate range to an object have been described in the prior art, such as those disclosed by Rutkiewicz et al., in US Application No. 14/489,381, titled "Method and System for Aircraft Strike Alerting, filed April 17, 2017, the entire specification of which is hereby incorporated by reference.

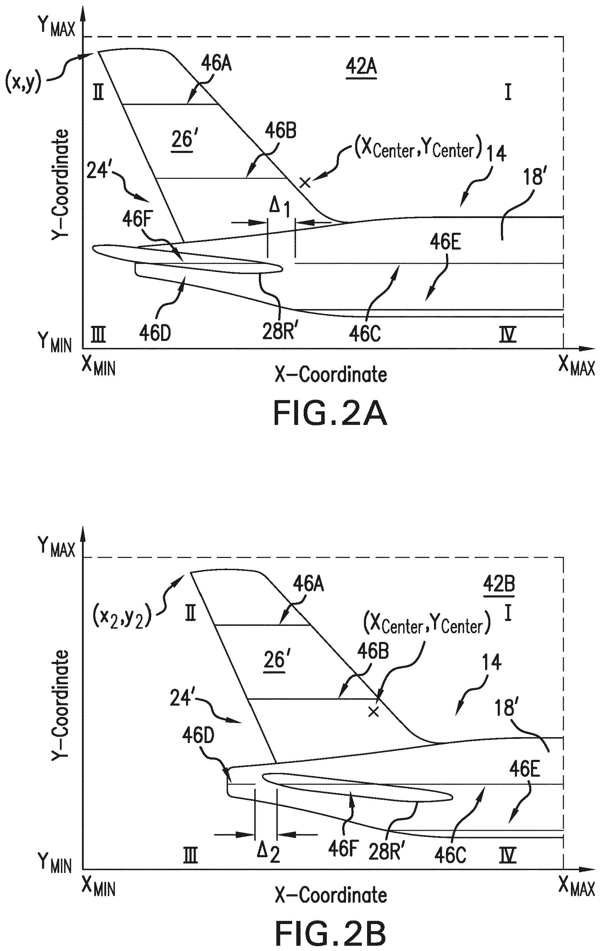

FIGS. 2A-2B are sub-image portions of images or zoomed-in images simultaneously captured by the two cameras located at distinct locations on the aircraft depicted in FIG. 1. In FIG. 2A, first sub-image 42A depicts tail 24 of parked aircraft 14 as captured by right-side camera 38 (as depicted in FIG. 1). First sub-image 42A is depicted in a Cartesian coordinate graph so as to provide pixel coordinates corresponding to various features of tail 24' as captured in first sub-image 42A. Horizontal pixel coordinates are numbered from xMIN to xMAX, and vertical pixel coordinates are numbered from yMIN to yMAX. A center location of first sub-image 42A is annotated in FIG. 2A as well as the pixel coordinates (xCENTER, yCENTER). The center pixel coordinates (xCENTER, yCENTER) of first sub-image 42A can be expressed in terms of xMIN, xMAX, yMIN and yMAX as follows:

$$(x_{CENTER}, y_{CENTER}) = \left( \frac{x_{MIN} + x_{MAX}}{2}, \frac{y_{MIN} + y_{MAX}}{2} \right)$$

Tail 24' of parked aircraft 14 includes vertical stabilizer 26' and horizontal stabilizer 28R'. Linearly-patterned light segments 46A-46F have been projected onto tail 24'. Linearly-patterned light segments 46A-46F include light segments 46A and 46B projected onto vertical stabilizer 26', light segments 46C-46E projected onto fuselage 18', and light segment 46F projected onto horizontal stabilizer 28R'. Light segments 46C, 46F and 46D were generated by light projector 34 (depicted in FIG. 1) as a single contiguous light segment, but because light projector 34 is mounted to aircraft 14 at a different location than the mounting location of right-side camera 38, from which first sub-image 42A is captured, light segment 46F does not appear contiguous with light segments 46C and 46D. There is a separation distance Δ1 in first sub-image 42A between light segment 46F and light segments 46C and 46D. Separation distance Δ1 is indicative of a range difference between range of horizontal stabilizer 28R' and of fuselage 18'.

In FIG. 2B, second sub-image 42B depicts the portion of the scene containing tail 24 of parked aircraft 14 as captured by left-side camera 36 (as depicted in FIG. 1). Second sub-image 42B is again depicted in a Cartesian coordinate graph so as to provide pixel coordinates corresponding to various features of tail 24' as captured in second sub-image 42B. Horizontal pixel coordinates are again numbered from xMIN to xMAX, and vertical pixel coordinates are numbered from yMIN to yMAX. A center location of second sub-image 42B is annotated in FIG. 2B as well as the pixel coordinates (xCENTER, yCENTER).

Tail 24' of parked aircraft 14 includes vertical stabilizer 26' and horizontal stabilizer 26R'. Linearly-patterned light segments 46A-46F have been projected onto tail 24'. Linearly-patterned light 46A-46F include light segments 46A and 46B projected onto vertical stabilizer 26', light segments 46C-46E projected onto fuselage 18', and light segment 46F projected onto horizontal stabilizer 28R'. Light segments 46C, 46F and 46D were generated by light projector 34 (depicted in FIG. 1) as a single contiguous light segment, but because light projector 34 is mounted to aircraft 14 at a different location than the mounting location of left-side camera 36, from which second sub-image 42B was captured, linear segment 46F does not appear contiguous with linear segments 46C and 46D. There is a separation distance Δ2 in second sub-image 42B between linear segment 46F and linear segments 46C and 46D. Separation distance Δ2 is indicative of a range difference between range of horizontal stabilizer 44 and of fuselage 18'.

Not only does the separation distance have different values in images 42A and 42B, but parked aircraft 18 is imaged in different locations in images 42A and 42B. For example, the top left-most corner of vertical stabilizer 26' has pixel coordinates (x1, y1) in first sub-image 42A, but has pixel coordinates (x2, y2) in second sub-image 42B. Here horizontal pixel coordinate x2 has a value that is much greater than the value of horizontal pixel coordinate x1, which indicates that the top left-most corner of vertical stabilizer 26' has been translated to the right from first sub-image 42A to second sub-image 42B. Each portion of parked aircraft 14 is imaged in both first sub-image 42A and second sub-image 42B, but not necessarily at the same location within the image. Each image location within the image is indicative of an angle with respect to the optical axis of the left- or right-side camera 36 or 38 which captured the sub-image 42A or 42B.

In some embodiments, both right-side camera 38 and left-side camera 36 are mounted on aircraft 12 such that their optical axes are aligned with fuselage axis 40 (e.g., parallel to the fuselage axis). In such embodiments, a center of each sub-images 42A and 42B corresponding to pixel coordinates (xMAX/2, yMAX/2) will correspond to a location of the scene aligned in the direction parallel with fuselage axis 40 directly in front left- and right-side cameras 36 and 38.

Each of images 42A and 42B has been divided into quadrants I-IV with respect to the center of the images. Quadrant I of images 42A and 42B includes objects in the scene that are aligned at angles above and right of the optical axis. Quadrant II of images 42A and 42B includes objects in the scene that are aligned at angles above and left of the optical axis. Quadrant III of images 42A and 42B includes objects in the scene that are aligned at angles below and left of the optical axis. Quadrant IV of images 42A and 42B includes objects in the scene that are aligned at angles below and right of the optical axis.

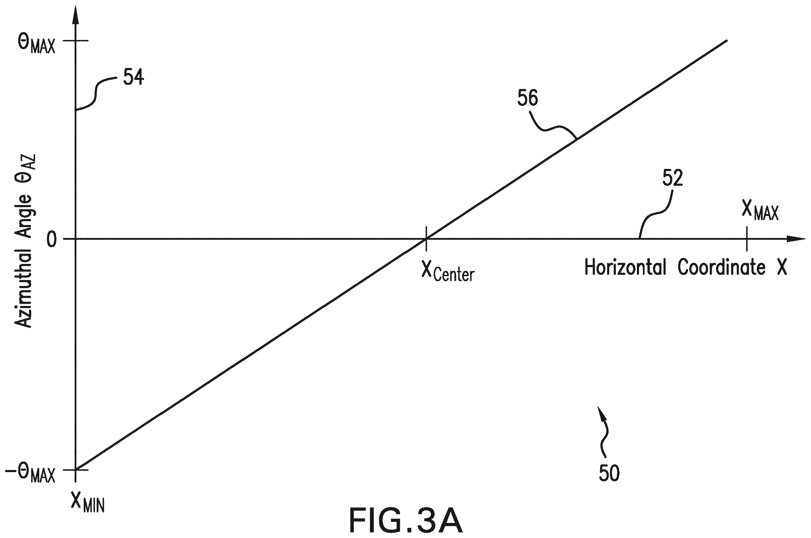

FIGS. 3A-3B are graphs depicting a relation between image coordinates and angle to object imaged at the image coordinates. When an object is captured in an image, its image location is indicative of its relative position with respect to the optical axis. Thus, the pixel-coordinates corresponding to the various image locations can be used to determine the specific angle of objects imaged at such image locations. In FIG. 3A, graph 50 includes horizontal axis 52, vertical axis 54 and azimuthal-angle/horizontal-coordinate relation 56. Horizontal axis 52 is indicative of a horizontal pixel coordinate x corresponding to an imaged object. Vertical axis 54 is indicative of azimuthal angle $\theta AZ$ of the object with respect to the optical axis. Azimuthal-angle/horizontal-coordinate relation 56 indicate the relation between the horizontal coordinate x and the azimuthal angle $\theta AZ$ of whatever object is imaged at an image location corresponding to such a horizontal coordinate x. In azimuthal-angle/horizontal-coordinate relation 56, as horizontal coordinate increases from xMIN to xMAX, azimuthal angle increases from $-\theta MAX$ to $+\theta MAX$. At a horizontal center of an image, indicated by horizontal pixel coordinate xCENTER, the objects imaged are located at an azimuthal angle $\theta AZ$ of 0 with respect to the optical axis.

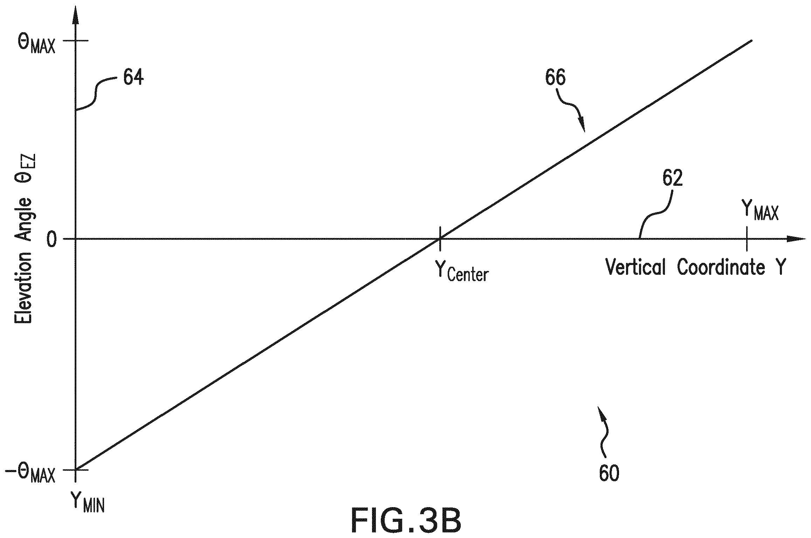

In FIG. 3B, graph 60 includes vertical axis 62, vertical axis 64 and azimuthal-angle/vertical-coordinate relation 66. Vertical axis 62 is indicative of a vertical pixel coordinate x corresponding to an imaged object. Vertical axis 64 is indicative of elevation angle (pEL of the object with respect to the optical axis. Elevation-angle/vertical-coordinate relation 66 indicate the relation between the vertical coordinate x and the elevation angle (pEL of whatever object is imaged at an image location corresponding to such a vertical coordinate y. In elevation-angle/vertical-coordinate relation 66, as vertical coordinate increases from yMIN to yMAX, elevation angle increases from $-\varphi MAX$ to $+\varphi MAX$. At a vertical center of an image, indicated by vertical pixel coordinate yCENTER, the objects imaged are located at an elevation angle $\varphi EL$ of 0 with respect to the optical axis.

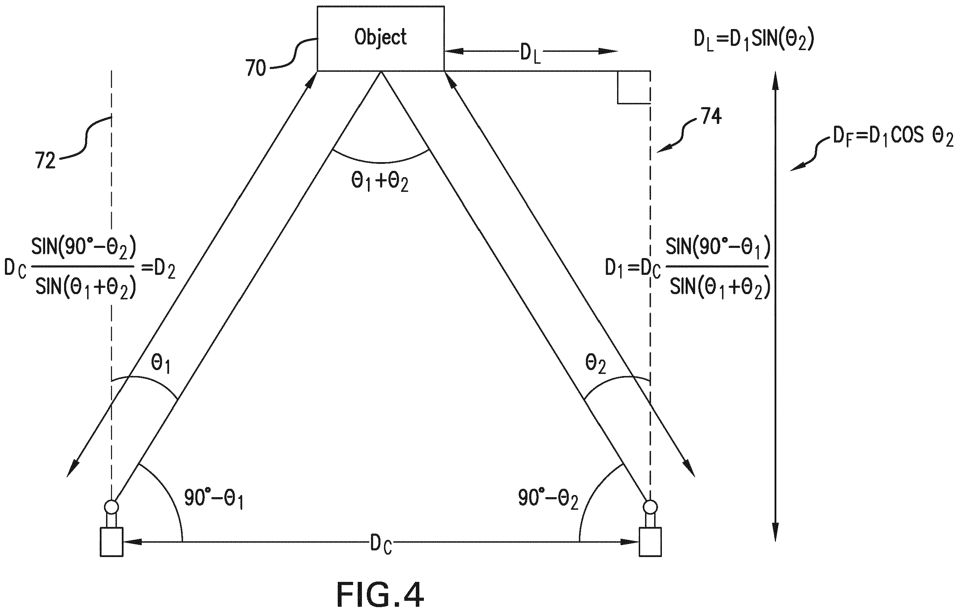

FIG. 4 is a schematic diagram depicting triangulation ranging using image data from simultaneously-captured images. In FIG. 4, object 70 has been simultaneously captured by left-side camera 36 and right-side camera 38. Left-side camera 36 has optical axis 72, which in the depicted embodiment is parallel to optical axis 74 of right-side camera 38. Based on the a first image location at which object 70 appears in the image captured by left-side camera 36, object 70 is determined to be at angle 01, with respect to optical axis 72. Similarly, based on a second image location at which object 70 appears in the image captured by right-side camera 38, object 70 is determined to be at angle $\theta2$, with respect to optical axis 74.

A triangle has been drawn between each of three vertices corresponding to object 70 and left- and right-side cameras 36 and 38. The triangle segment between vertices corresponding to left- and right-side cameras 36 and 38 is designated DC. Segment DC is determined by the mounting locations of left- and right-side cameras 36 and 38, and therefore can be known. In the depicted embodiment, left- and right-side cameras 36 and 38 are aligned along a transverse axis that is perpendicular to both of optical axes 72 and 74. Therefore, the interior angle of the vertex corresponding to left-side camera 36 has an angle of $90°-\theta1$, and the interior angle of the vertex corresponding to right-side camera 38 has an angle of $90°-\theta2$.

The triangle is determined by this angle-side-angle knowledge. Not only is the triangle determined by knowing these three metrics - angle, side, and angle, but the other vertex angle and the dimension of the other triangle segments can be determined. The sum of interior angles in a triangle is 180°. Therefore, the angle of the vertex corresponding to object 70 is equal to $\theta1+\theta2$. Using the law of sines, the dimension of the triangle segment connecting the vertices corresponding to object 70 and left-side camera 36 can be determined to be equal to $DC*sin(90°-\theta1)/sin(\theta1+\theta2)$. Similarly, the dimension of the triangle segment connecting the vertices corresponding to object 70 and left-side camera 36 is given by: $DC*sin(90°-\theta2)/sin(\theta1+\theta2)$.

Each of these calculated triangle segment dimensions contains range information between object 70 and left- and right-side cameras 36 and 38. Each of these triangle segments can be decomposed into two orthogonal components - one in the direction of optical axes 72 and 74 and one in the direction perpendicular to optical axes 72 and 74. For example, the range component of object 70 in the direction of optical axes 72 and 74 can be expressed as either as $DC*sin(90°-\theta1)/sin(\theta1+\theta2)*cos\theta2$ or as $DC*sin(90°-\theta2)/sin(\theta1+\theta2)*cos\theta1$. Similarly, the transverse range component (i.e., the component in the direction perpendicular to optical axes 72 and 74) of object 70 with respect to left-side camera 36 is given by $DC*sin(90°-\theta2)/sin(\theta1+\theta2)*cos\theta1$. Similarly, the transverse range component of object 70 with respect to right-side camera 36 is given by $DC*sin(90°-\theta1)/sin(\theta1+\theta2)*sin\theta2$. Thus, if an object can be identified and located within two simultaneously-captured images, and the camera locations and orientations are known, ranging of the object so captured can be determined.

Identifying objects in captured imagery is not always easy, though. In some lighting conditions, objects are difficult to identify, even by humans, much less by machine algorithm. Therefore, artificial illumination is sometimes necessary to ensure that captured images are of adequate quality to identify objects. Even if such artificial illumination is performed, machine algorithms of image identification can be complex, and the data of even a single image is voluminous.

Data can be reduced by illuminating objects in a scene by projecting structured-light onto the scene. For example, a laser can azimuthally sweep across the cameras' fields of view illuminating objects within the fields of view from a left-side to a right-side. The laser can be projected from a light projector at a predetermined elevation with respect to the cameras. The swept beam can be maintained at a constant angle of elevation with respect to a level plane, such as a ground surface, for example. Such a swept beam will illuminate a small fraction of the solid-angle field of view of the camera. Using only image data corresponding to pixels upon which light reflected by the swept beam is focused, identification of beam-illuminated portions of objects can be performed more simply than identification of everything in the full field of view. Therefore, data correlation of image data corresponding to structured-light illumination regions can be simplified with respect to full two-dimensional image correlations. Such full two-dimensional image correlation effectively can be reduced to a one-dimensional correlation using such structured-light techniques.

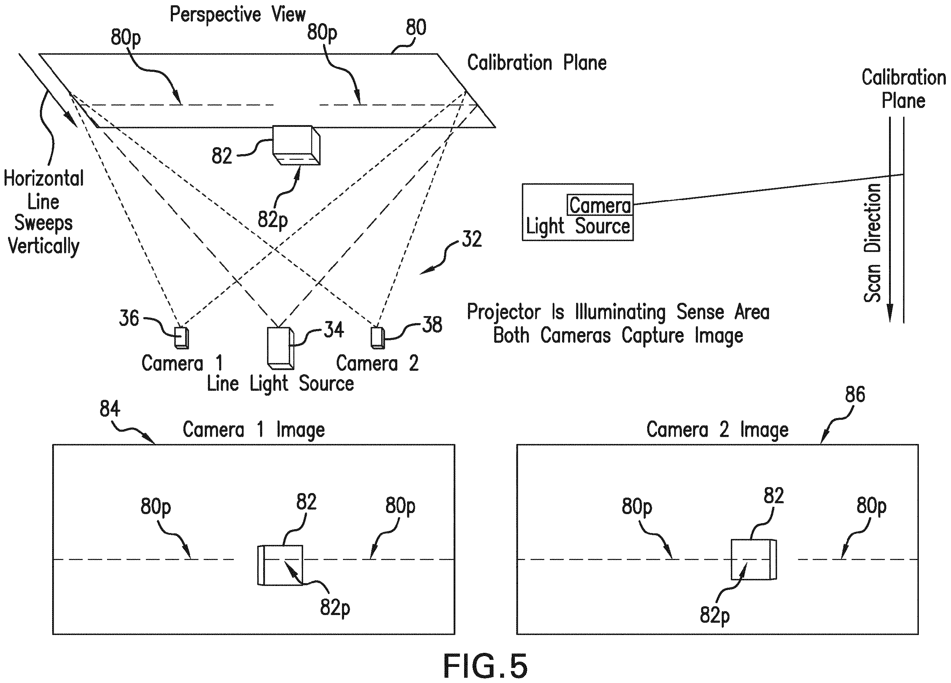

FIG. 5 is a schematic diagram depicting an embodiment of an object range sensor having light projector and two cameras located on a shared transverse axis. In FIG. 5, object ranging system 32 includes light projector 34, left-side camera 36, and right-side camera 38, all aligned on a common transverse axis. Light projector 34 is depicted projecting linearly-patterned light onto a scene that includes calibration screen 80 and foreground object 82. The linearly-patterned light defines a plane that includes the transverse axis. The linearly-patterned light projected onto the scene illuminates linearly-patterned portion 80p of calibration screen 80 and linearly-patterned portion 82p of object 82. First image 84 depicts the scene as it appears to left-side camera 36. First image 84 depicts linearly-patterned portion 80p of calibration screen 80, foreground object 82, and linearly-patterned portion 82p of foreground object 82. Left-side camera 36 has an active row of pixels upon which linear-patterned portion 80p of calibration screen 80 and linear-patterned portion 82p of foreground object 82 are focused. Second image 86 depicts the scene as it appears to right-side camera 38. Second image 86 also depicts linearly-patterned portion 80p of calibration screen 80, foreground object 82, and linearly-patterned portion 82p of foreground object 82. Right-side camera 38 also has an active row of pixels upon which linear-patterned portion 80p of calibration screen 80 and linear-patterned portion 82p of foreground object 82 are focused.

The various objects and linearly-illuminated portions 80, 80p, 82 and 82p thereof are captured at different locations within the active rows of pixels in left- and right-side cameras 36 and 38. For example, there is a break in the otherwise contiguous linearly-patterned portions 80p and 82p of the scene in both first and second images 84 and 86. In image 84, which is captured by left-side camera 36, the break occurs just to the left of a location where foreground object 82 is imaged. In image 86, which is captured by right-side camera 38, the break occurs just to the right of a location where foreground object 82 is imaged. In each of these images, portions of the calibration screen, which are shadowed by foreground object 82 from the perspective of light projector 34, are visible to each of left- and right-side cameras 36 and 38. These captured shadow portions interrupt the linearly-patterned light projected onto the scene.

Such interruptions in the otherwise contiguous linearly-patterned portions of the scene can be indicative of a discontinuity of range, in this case caused by object 82 being in the foreground of calibration screen 80. The image locations at which the various linearly-patterned portions are captured can be used to range the objects upon which the linearly-patterned light is projected. To determine image locations in both first and second images 84 and 86 that correspond to an object in the scene, a correlation of the pixel data can be performed. For example, a particular object in the scene, such as foreground object 82 can have a reflectivity pattern that is indicative of its shape or of its surface condition or material, for example.

Captured portions of images of objects illuminated by linearly-patterned light can contain linearly-patterned image portions that are indicative of such a reflectivity pattern of foreground object 82. The correlation of the linearly-patterned portions of the image can result in identification of linearly-patterned portion 82p of foreground object 82 as imaged in both first image 84 and as imaged in second image 86. After identifying these correlated image regions, ranging of the object to which the image regions pertain can be performed. Identification of the exact nature of the object corresponding to correlated image regions is not necessary. Thus, the correlated image regions could correspond to a parked aircraft or to any object within the field of view illuminated by the linearly-patterned light. Sophisticated object identification algorithms are not required to determine that an object is in the field of view (which can be performed by image correlation, for example) and a range to such an identified object can be subsequently determined (e.g., by triangulation, for example). Various spatial configurations can be used to locate light projector 34 and left- and right-side cameras 36 and 38. In the FIG. 5A depiction, left- and right-side cameras 36 and 38 are located symmetrically about light projector 34. Such a spatial configuration can result in a uniform performance across the field of view. Such uniform performance can be measured using metrics of resolution and/or range precision. In some embodiments, various non-symmetric spatial configurations can be used for various reasons, such as, for example, practical mounting configurations, etc.

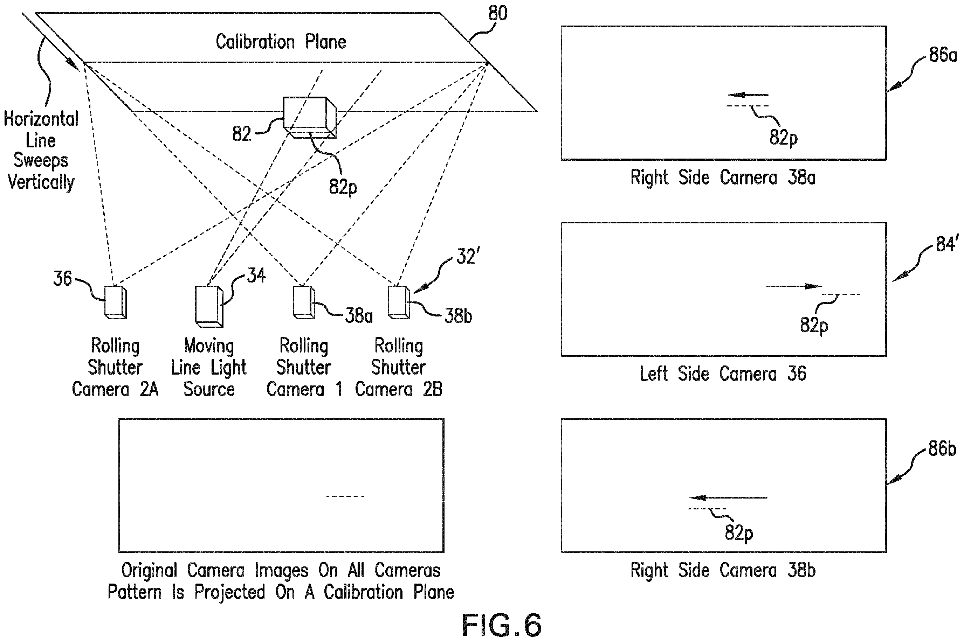

FIG. 6 is a schematic diagram depicting a three camera embodiment of an object range system. In FIG. 6, object ranging system 32' includes light projector 34, left-side camera 36, and right-side cameras 38a and 38b, all aligned on a common transverse axis. Light projector 34 is depicted projecting linearly-patterned light onto a scene that includes calibration screen 80 and foreground object 82. The linearly-patterned light defines a plane that includes the transverse axis. The linearly-patterned light projected onto the scene illuminates linearly-patterned portion 80p of calibration screen 80 and linearly-patterned portion 82p of object 82. First image 84' depicts the scene as it appears to left-side camera 36. First image 84' depicts linearly-patterned portion 82p of foreground object 82. Left-side camera 36 has an active row of pixels upon which linear-patterned portion 82p of foreground object 82 are focused. Second image 86a depicts the scene as it appears to right-side camera 38a. Second image 86a also depicts linearly-patterned portion 82p of foreground object 82. Right-side camera 38a also has an active row of pixels upon which linear-patterned portion 82p of foreground object 82 are focused. Third image 86a depicts the scene as it appears to right-side camera 38b. Third image 86b also depicts linearly-patterned portion 82p of foreground object 82. Right-side camera 38b again has an active row of pixels upon which linear-patterned portion 82p of foreground object 82 are focused.

Linearly-illuminated foreground object 82 is captured at different locations within the active rows of pixels in left-side camera 36 and in right-side cameras 38a and 38b. Pairs of such image data (e.g., pixel coordinates corresponding to object 82) can be used to triangulate range of object 82. Range can be multiply determined using different combinations of row data (e.g., using image data captured by left- and right-side cameras 36 and 38a; using image data captured by left- and right-side cameras 36 and 38b; and using image data captured by right-side cameras 38a and 38b). An average of the determined ranges, or a centroid of the determined locations can be used to improve the precision of measurement over that determined using data from a single pair of cameras. In some embodiments, each side of the aircraft will be equipped with two or more cameras and/or with a light projector.

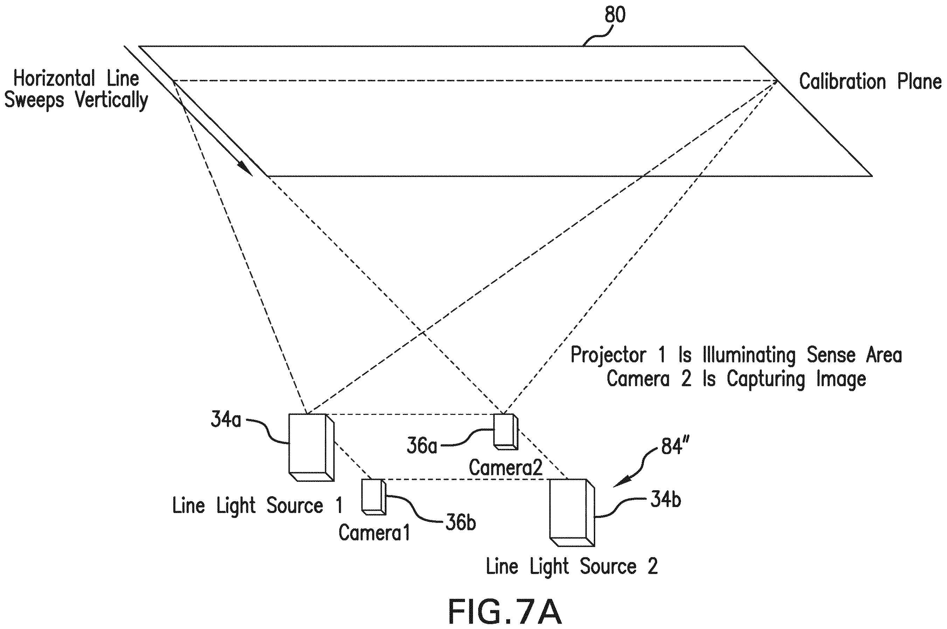

FIGS. 7A-7D are schematic diagrams depicting various projected beams from a two-dimensionally distributed camera/projector embodiment of an object range system. In FIG. 7A, object ranging system 32" includes light projectors 34a and 34b and cameras 36a and 36b, aligned in a rectangular fashion. Each segment of the alignment rectangle includes one of light projectors 34a and 34b and one of cameras 36a and 36b. Light projector 34a is depicted projecting linearly-patterned light (i.e., a horizontal line) onto calibration screen 80. The linearly-patterned light projected onto calibration screen 80 illuminates linearly-patterned portion 80p of calibration screen 80. Camera 36a is located on the rectangular segment that is coplanar with the linearly-patterned light projected by light projector 34a. Thus, an active row of pixels of camera 36a can be configured to capture a row of image data upon which the linearly-patterned light projected onto and reflected by calibration screen 80 is focused. Knowing the location of light projector 34a, camera 36a and pixel coordinates upon which features of linearly-patterned light are focused can permit ranging of the objects from which such image features are reflected.

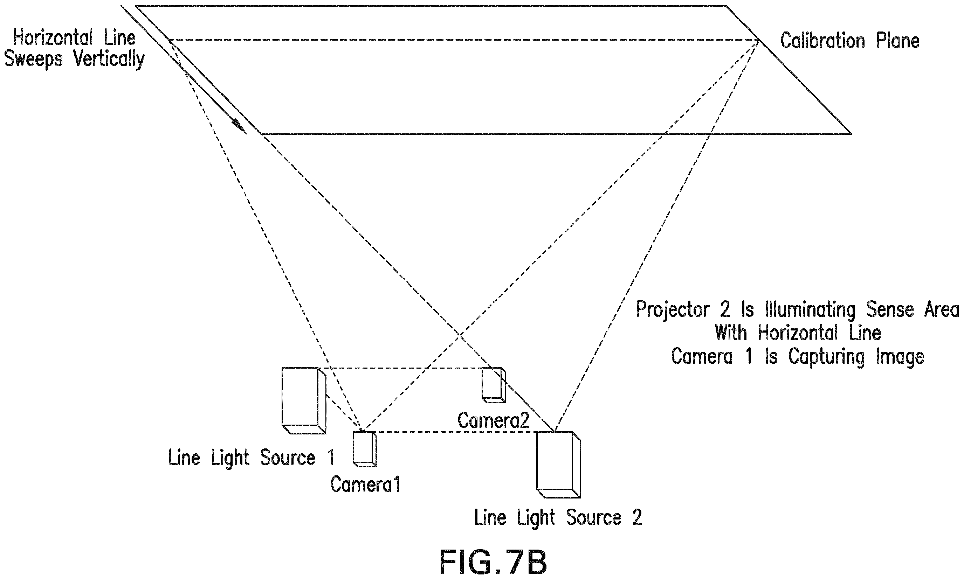

Similarly, light projector 34b can be used in conjunction with camera 36b to determine range to objects. In FIG. 7B, light projector 34b is depicted projecting linearly-patterned light (i.e., a horizontal line) onto calibration screen 80. The linearly-patterned light projected onto calibration screen 80 illuminates linearly-patterned portion 80p of calibration screen 80. Camera 36a is located on the rectangular segment that is coplanar with the linearly-patterned light projected by light projector 34a. Thus, an active row of pixels of camera 36a can be configured to capture a row of image data upon which the linearly-patterned light projected onto and reflected by calibration screen 80 is focused. Knowing the location of light projector 34a, camera 36a and pixel coordinates upon which features of linearly-patterned light are focused can permit ranging of the objects from which such image features are reflected.

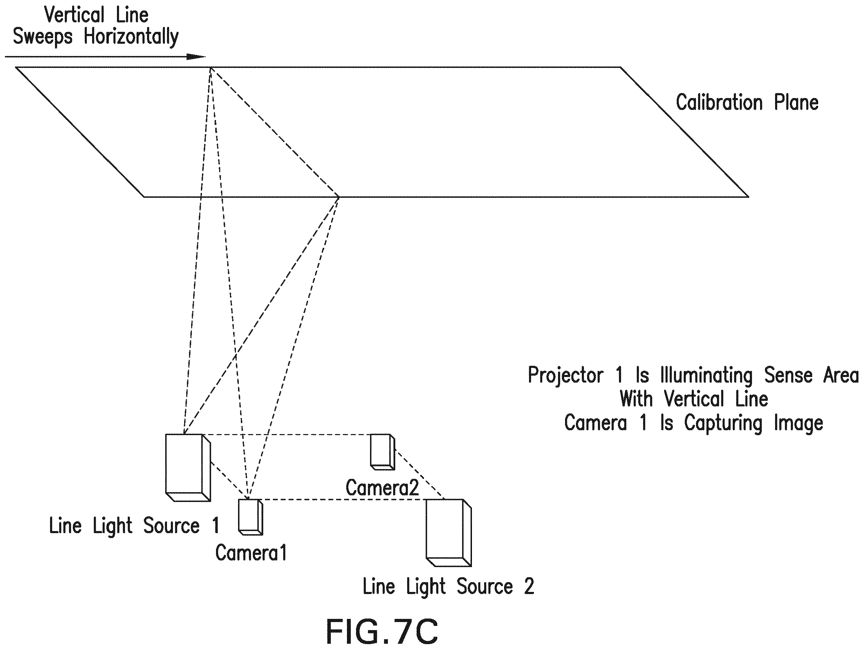

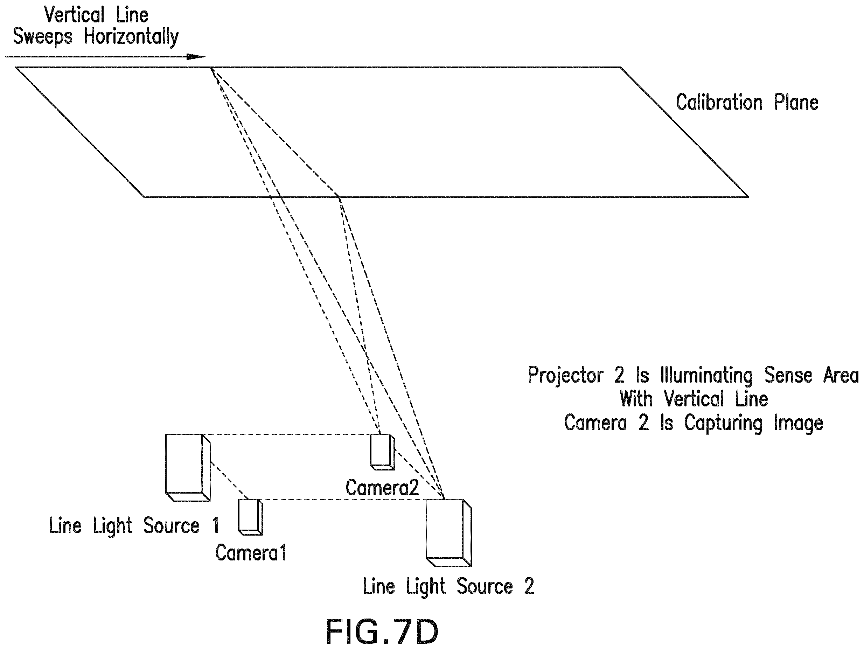

Light projectors 34a and 34b can be paired with the other cameras 36b and 36a, respectively, (i.e., those not paired using horizontal lines) by projecting vertically oriented linearly-patterned light onto the scene. The camera configuration can be updated for the next image so as to capture pixel columns of imagery. The active column of pixels of camera 36b can be configured to capture a column of image data upon which the vertically linearly-patterned light projected onto and reflected by calibration screen is focused. Such scenarios are depicted in FIGS. 7C and 7D. This configuration again permits range to be multiply determined using different combinations of light projectors 34a and 34b and cameras 36a and 36b An average of the determined ranges, or a centroid of the determined locations can be used to improve the precision of measurement over that determined using data from a single pair of cameras.

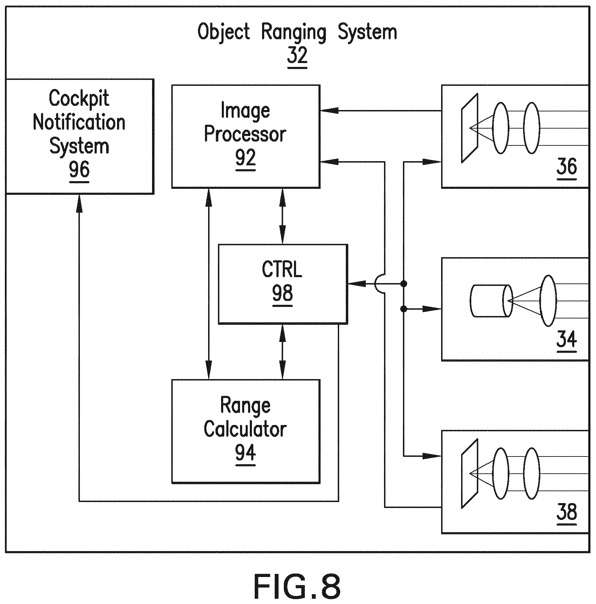

FIG. 8 is a block diagram of an embodiment of an object ranging system. In FIG. 6, object ranging system 32 includes light projector 34, cameras 36 and 38, image processor 92, range calculator 94, cockpit notification system 96, and controller 98. Light projector 34 is configured to be mounted at a projector location on an aircraft. Light projector 34 is further configured to project linearly-patterned light from light projector 34 onto a scene external to the aircraft, thereby illuminating a linearly-patterned portion of the scene including a linearly-patterned portion(s) of an object(s) within the scene.

Cameras 36 and 38 are configured to be mounted at two distinct camera locations on the aircraft. Such distinct camera locations are different from one another so that images captured by the cameras will be from different vantage points. Cameras 36 and 38 are further configured to receive light reflected from the scene. Each of cameras 36 and 38 is also configured to focus the received light onto a focal plane array comprising a plurality of light-sensitive pixels, thereby forming an image of the scene. The image can include pixel data generated by the plurality of light-sensitive pixels. Cameras 36 and 38 are further configured to simultaneously capture, when the linearly-patterned light is projected onto the scene, images of the scene from the two distinct camera locations on the aircraft.

In some embodiments, cameras 36 and 38 can be configured to simultaneously capture sub-regions of the fields of view, so as to track a ranged object, for example. In some embodiments, light projector 34 can be coordinated to project linearly-patterned light only on the sub-regions captured by cameras 36 and 38. In some embodiments, various sub-regions can be captured between full field of view capture events. For example, objects first can be ranged using a full field of view operation, followed by various sub-region ranging corresponding to the objects ranged within a predetermined distance of the aircraft. In some embodiments, more than two cameras can be used for ranging. For example, two cameras can be mounted on each side of the aircraft - two right-side cameras and two left-side cameras. In such an embodiment, the two right-side cameras can be configured to range objects on the right side of the aircraft, and the two left-side cameras can be configured to range objects on the left side of the aircraft, for example.

Image processor 92 receives inputs from cameras 36 and 38. Image processor 92 is configured to identify pixel coordinates corresponding to a subset of the plurality of light-sensitive pixels upon which the linearly-patterned light projected by light projector 34 and reflected from the linearly-patterned portion of the scene is focused. For example, image processor 92 can be configured to identify first and second regions of the first and second images, onto which the linearly-patterned light is focused, respectively. Image processor 92 is further configured to correlate the identified first and second regions with one another so as to determine pixel coordinates corresponding to specific objects in the scene.

Range calculator 94 is configured to calculate range to the specific objects in the scene corresponding to the correlated first and second image regions. Range calculator 94 can calculate range using triangulation based on the determined first and second pixel-coordinates corresponding to the correlated first and second image regions, as well as the first and second distinct camera locations from which the first and second images are simultaneously captured, respectively.

Controller 98 generates commands that control the operation of light projector 34 and cameras 36 and 38. Controller 98 outputs alarms ranges and images to cockpit notification system 96. The range calculation can include other range calculations to an illuminated object, such as triangulation using the projector location, the first camera location and the first camera's pixel coordinates corresponding to the illuminated object, and a triangulation using the projector location, the second camera location and the second camera's pixel coordinates corresponding to the illuminated object. The various calculated ranges to the illuminated object can be used in conjunction with one another so as to obtain a resulting range calculation with higher resolution than is obtained using only a single range calculation.

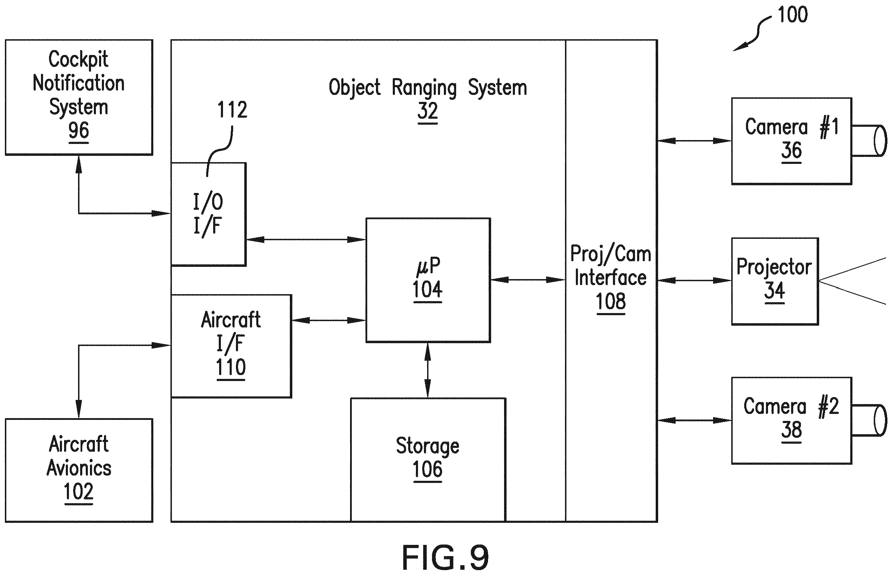

FIG. 9 is a block diagram of an embodiment of an object ranging system. In FIG. 7, aircraft collision alerting system 100 includes light projector 34, cameras 36 and 38, object ranging system 32, aircraft avionics 102 and cockpit notification system 96. Object ranging system 32 includes processor(s) 104, storage device(s) 106, Projector/camera interface 108, Aircraft interface 110, and input/output interface 112. Processor(s) 104 can receive program instructions from storage device(s) 106. Processor(s) 104 can be configured to generate control signals for each of light projector 34, cameras 36 and 38, object ranging system 32, aircraft avionics 102 and cockpit notification system 96. For example, processor(s) 104 can be configured to receive, from cameras 36 and 38, simultaneously-captured images. Processor(s) 104 can perform image processing algorithms upon the received simultaneously-captured images, so as to determine regions of each that correlate one to another. Processor(s) 104 can be configured to coordinate activities of projector 34 and cameras 36 and 38. Processor(s) 104 can be further configured to communicate with both aircraft avionics 102 and with cockpit notification system 96.

Processor(s) 104, in some embodiments, can be configured to implement functionality and/or process instructions for execution within object ranging system 32. For instance, processor(s) 104 can be capable of processing instructions stored in storage device(s) 106. Examples of processor(s) 104 can include any one or more of a microprocessor, a controller, a digital signal processor(s) (DSP), an application specific integrated circuit (ASIC), a field-programmable gate array (FPGA), or other equivalent discrete or integrated logic circuitry.

Storage device(s) 106 can be configured to store information within object ranging system 32 during operation. Storage device(s) 106, in some examples, is described as computer-readable storage media. In some examples, a computer-readable storage medium can include a non-transitory medium. The term "non-transitory" can indicate that the storage medium is not embodied in a carrier wave or a propagated signal. In certain examples, a non-transitory storage medium can store data that can, over time, change (e.g., in RAM or cache). In some examples, storage device(s) 106 is a temporary memory, meaning that a primary purpose of storage device(s) 106 is not long-term storage. Storage device(s) 106, in some examples, is described as volatile memory, meaning that storage device(s) 106 do not maintain stored contents when power to object ranging system 32 is turned off. Examples of volatile memories can include random access memories (RAM), dynamic random access memories (DRAM), static random access memories (SRAM), and other forms of volatile memories. In some examples, storage device(s) 106 is used to store program instructions for execution by processor(s) 104. Storage device(s) 106, in one example, is used by software or applications running on object ranging system 32 (e.g., a software program implementing long-range cloud conditions detection) to temporarily store information during program execution.

Storage device(s) 106, in some examples, can also include one or more computer-readable storage media. Storage device(s) 106 can be configured to store larger amounts of information than volatile memory. Storage device(s) 106 can further be configured for long-term storage of information. In some examples, storage device(s) 106 include non-volatile storage elements. Examples of such non-volatile storage elements can include magnetic hard discs, optical discs, flash memories, or forms of electrically programmable memories (EPROM) or electrically erasable and programmable (EEPROM) memories.

Projector/camera interface 108 can be used to communicate information between object ranging system 32, light projector 34 and/or cameras 36 and 38. In some embodiments, such information can include commands for light projector 34 and/or cameras 36 and 38. Such information can include images captured by cameras 36 and 38. In some embodiments, such information can include data processed by object ranging system 32, such as, for example, range data. Projector/camera interface 108 can also include a communications module. Projector/camera interface 108, in one example, utilizes the communications module to communicate with external devices via one or more networks, such as one or more wireless or wired networks or both. The communications module can be a network interface card, such as an Ethernet card, an optical transceiver, a radio frequency transceiver, or any other type of device that can send and receive information. Other examples of such network interfaces can include Bluetooth, 3G, 4G, and Wi-Fi 33 radio computing devices as well as Universal Serial Bus (USB). In some embodiments, communication with the aircraft can be performed via a communications bus, such as, for example, an Aeronautical Radio, Incorporated (ARINC) standard communications protocol. In an exemplary embodiment, aircraft communication with the aircraft can be performed via a communications bus, such as, for example, a Controller Area Network (CAN) bus.

Aircraft interface 110 can be used to communicate information between object ranging system 32 and aircraft avionics 102. Processor(s) 104 is in communication with cockpit aircraft avionics 102 via aircraft interface 110. Aircraft avionics 102 can provide processor(s) 104 with metrics indicative of the aircraft's location, orientation, speed, etc. Processor(s) 104 can provide notification system 96 with signals indicative of risk of collision with an object(s) external to the aircraft, based on received metrics indicative of the aircraft's location, orientation, speed, etc.

Input/output interface 112, in some examples, is configured to receive input from a user. In some embodiments, input communication from the user can be performed via a communications bus, such as, for example, an Aeronautical Radio, Incorporated (ARINC) standard communications protocol. In an exemplary embodiment, user input communication from the user can be performed via a communications bus, such as, for example, a Controller Area Network (CAN) bus. Input/output interface can include a display device, a sound card, a video graphics card, a speaker, a cathode ray tube (CRT) monitor, a liquid crystal display (LCD), a light emitting diode (LED) display, an organic light emitting diode (OLED) display, or other type of device for outputting information in a form understandable to users or machines. In some embodiments, output communication to the user can be performed via a communications bus, such as, for example, an Aeronautical Radio, Incorporated (ARINC) standard communications protocol. In an exemplary embodiment, output communication to the user can be performed via a communications bus, such as, for example, a Controller Area Network (CAN) bus.

Some examples relate to a method for ranging an object in a scene external to an aircraft. The method includes projecting, from a light projector mounted at a projector location on the aircraft, linearly-patterned light in a controllable direction onto the scene external to the aircraft. The method includes simultaneously capturing, via two cameras mounted to the aircraft at from two distinct locations, first and second vectors of pixel data corresponding to active first and second rows or first and second columns of pixels, respectively, upon which the linearly-patterned portion of the scene is focused when the linearly-patterned light is projected onto the scene. The method includes coordinating the controllable direction of the projected linearly-patterned light so that the illuminated linearly-patterned portion of the scene is focused onto the active first and second rows or the first and second columns of pixels. The method includes calculating, using triangulation based on the captured first and second vectors of pixel data and the first and second distinct camera locations from which the first and second vectors of pixel data are simultaneously captured, range to the object. The method also includes generating an output signal indicative of the calculated range.

The method of the preceding paragraph can optionally include, additionally and/or alternatively, any one or more of the following features, configurations and/or additional components:

A further example of the foregoing method can further include identifying first and second illumination patterns in the first and second vectors of pixel data, respectively, the identified first and second illumination patterns indicative of a discontinuity in range between the object in the scene and a background of the scene.

A further example of any of the foregoing methods can further include determining, based on the identified first and second illumination patterns, first and second pixel coordinates, respectively, corresponding to an edge of object in the scene.

A further example of any of the foregoing methods can further include calculating, using triangulation based on the determined first and second pixel coordinates and the first and second distinct camera locations from which the first and second vectors of pixel data are simultaneously captured, range to the object.

A further example of any of the foregoing methods can further include generating an alert signal if the calculated range to the object is within a collision zone or on a collision trajectory.

While the invention has been described with reference to an exemplary embodiment(s), it will be understood by those skilled in the art that various changes may be made without departing from the scope of the invention as defined by the appended claims. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

**Claims**

1. A system for ranging an object in a scene external to an aircraft, the system comprising:

   a light projector (34) configured to be mounted at a projector location on the aircraft, and further configured to project linearly-patterned light in a controllable direction onto the scene external to the aircraft, thereby illuminating a linear-patterned portion of the scene;
   first and second cameras (36, 38) configured to be mounted at first and second distinct camera locations on the aircraft and aligned so as to be able to simultaneously capture, when the linear-patterned light is projected onto the scene, first and second vectors of pixel data corresponding to active first and second rows or first and second columns of pixels, respectively, upon which the linear-patterned light projected by the light projector and reflected by the scene is focused;
   a controller (98) configured to coordinate the controllable direction of the projected linearly-patterned light so that the illuminated linearly-patterned portion of the scene is focused onto the active first and second rows or the first and second columns of pixels; and
   a range calculator (94) configured to calculate range to the object using triangulation based on the captured first and second vectors of pixel data and the first and second distinct camera locations from which the first and second vectors of pixel data are simultaneously captured.

2. The system of claim 1, further comprising:
   an image processor (92) configured to identify first and second illumination patterns in the first and second vectors of pixel data, respectively, the identified first and second illumination patterns indicative of a discontinuity in range between the object in the scene and a background of the scene.

3. The system of claim 2, wherein the image processor (92) is further configured to determine, based on the identified first and second illumination patterns, first and second pixel coordinates, respectively, corresponding to an edge of object in the scene.

4. The system of claim 3, wherein the range calculator (94) is further configured to calculate range to the object using triangulation based on the determined first and second pixel coordinates and the first and second distinct camera locations from which the first and second vectors of pixel data are simultaneously captured.

5. The system of any preceding claim, wherein the projector location and the first and second camera locations are along a common axis.

6. The system of claim 5, wherein the controllable direction that the linear-patterned light is projected is an angular direction about the common axis.

7. The system of any preceding claim, wherein the controller (98) is further configured to coordinate the controllable direction of the projected linearly-patterned light so that a time sequence of illuminated linearly-patterned portions of the scene are focused onto a corresponding time sequence of active rows or columns of pixels of both the first and second cameras (36, 38), respectively.

8. The system of any preceding claim, wherein the controller (98) is further configured to enable or inhibit the projection of linearly-patterned light onto the scene external to the aircraft.

9. The system of claim 8, wherein the cameras (36, 38) are further configured to capture, when the linear-patterned light onto the scene is inhibited, third and fourth vectors of pixel data corresponding to the active first and second rows or first and second columns of pixels.

10. The system of claim 9, wherein the image processor (92) is further configured to generate difference vectors based on a difference between the first and second vectors and the third and fourth vectors.

11. The system of any preceding claim, wherein the linearly-patterned light comprises a solid-line pattern.

12. The system of any preceding claim, wherein the linearly-patterned light comprises a dashed-line pattern having a binary-weighted spatial frequency or a pseudo-randomly varying spatial frequency.

13. The system of any preceding claim, wherein each of the first and second cameras (36, 38) comprises a plurality of rows of pixels, and each is configured to sequentially make the plurality of rows active, thereby creating a two-dimensional image in a rolling shutter fashion.

14. The system of any preceding claim, further comprising a cockpit notification system (96) configured to generate an alert signal if the calculated range to the object is within a collision zone or on a collision trajectory.

15. The system of claim 14, wherein the cockpit notification system (96) includes a display device configured to display an image of the scene annotated with the calculated position values and range data.

**Patentansprüche**

1. System zur Messung des Abstands zu einem Objekt in einer Szene außerhalb eines Luftfahrzeugs, wobei das System Folgendes umfasst:

   einen Lichtprojektor (34), der dazu konfiguriert ist, an einer Projektorstelle an dem Luftfahrzeug montiert zu sein, und ferner dazu konfiguriert ist, linear gemustertes Licht in einer steuerbaren Richtung auf die Szene außerhalb des Luftfahrzeugs zu projizieren, wodurch ein linear gemusterter Abschnitt der Szene beleuchtet wird;
   eine erste und zweite Kamera (36, 38), die dazu konfiguriert sind, an einer ersten und zweiten unterschiedlichen Kamerastelle an dem Luftfahrzeug montiert zu sein, und so ausgerichtet sind, dass sie dazu in der Lage sind, wenn das linear gemusterte Licht auf die Szene projiziert ist, einen ersten und zweiten Vektor von Pixeldaten, die jeweils einer aktiven ersten und zweiten Zeile oder ersten und zweiten Spalte von Pixeln entsprechen, gleichzeitig zu erfassen, worauf das durch den Lichtprojektor projizierte und durch die Szene reflektierte linear gemusterte Licht fokussiert ist;
   eine Steuerung (98), die dazu konfiguriert ist, die steuerbare Richtung des projizierten linear gemusterten Lichts zu koordinieren, sodass der beleuchtete linear gemusterte Abschnitt der Szene auf die aktive erste und zweite Zeile oder die erste und zweite Spalte von Pixeln fokussiert ist; und
   einen Abstandsrechner (94), der dazu konfiguriert ist, den Abstand zu dem Objekt unter Verwendung von Triangulation auf Grundlage des erfassten ersten und zweiten Vektors von Pixeldaten und der ersten und zweiten unterschiedlichen Kamerastelle, von denen aus der erste und zweite Vektor von Pixeldaten gleichzeitig erfasst werden, zu berechnen.

2. System nach Anspruch 1, ferner umfassend:

   einen Bildprozessor (92), der dazu konfiguriert ist, jeweils ein erstes und zweites Beleuchtungsmuster in dem ersten und zweiten Vektor von Pixeldaten zu identifizieren, wobei das identifizierte erste und zweite Beleuchtungsmuster auf eine Diskontinuität des Abstands zwischen dem Objekt in der Szene und einem Hintergrund der Szene hinweisen.

3. System nach Anspruch 2, wobei der Bildprozessor (92) ferner dazu konfiguriert ist, auf Grundlage des identifizierten ersten und zweiten Beleuchtungsmusters jeweils erste und zweite Pixelkoordinaten zu bestimmen, die einer Kante Objekts in der Szene entsprechen.

4. System nach Anspruch 3, wobei der Abstandsrechner (94) ferner dazu konfiguriert ist, den Abstand zu dem Objekt unter Verwendung von Triangulation auf Grundlage der bestimmten ersten und zweiten Pixelkoordinaten und der ersten und zweiten unterschiedlichen Kamerastelle, von denen aus der erste und zweite Vektor von Pixeldaten gleichzeitig erfasst werden, zu berechnen.

5. System nach einem der vorhergehenden Ansprüche, wobei die Projektorstelle und die erste und zweite Kamerastelle entlang einer gemeinsamen Achse liegen.

6. System nach Anspruch 5, wobei die steuerbare Richtung, in der das linear gemusterte Licht projiziert wird, eine Winkelrichtung um die gemeinsame Achse ist.

7. System nach einem der vorhergehenden Ansprüche, wobei die Steuerung (98) ferner dazu konfiguriert ist, die steuerbare Richtung des projizierten linear gemusterten Lichts zu koordinieren, sodass eine Zeitfolge von beleuchteten linear gemusterten Abschnitten der Szene jeweils auf eine entsprechende Zeitfolge von aktiven Zeilen oder Spalten von Pixeln sowohl der ersten als auch der zweiten Kamera (36, 38) fokussiert sind.

8. System nach einem der vorhergehenden Ansprüche, wobei die Steuerung (98) ferner dazu konfiguriert ist, die Projektion von linear gemustertem Licht auf die Szene außerhalb des Luftfahrzeugs zu ermöglichen oder zu unterbinden.

9. System nach Anspruch 8, wobei die Kameras (36, 38) ferner dazu konfiguriert sind, wenn das linear gemusterte Licht auf die Szene unterbunden ist, einen dritten und vierten Vektor von Pixeldaten zu erfassen, die der aktiven ersten und zweiten Zeile oder ersten und zweiten Spalte von Pixeln entsprechen.

10. System nach Anspruch 9, wobei der Bildprozessor (92) ferner dazu konfiguriert ist, Differenzvektoren auf Grundlage einer Differenz zwischen dem ersten und zweiten Vektor und dem dritten und vierten Vektor zu erzeugen.

11. System nach einem der vorhergehenden Ansprüche, wobei das linear gemusterte Licht ein Muster mit durchgezogenen Linien umfasst.

12. System nach einem der vorhergehenden Ansprüche, wobei das linear gemusterte Licht ein Muster mit gestrichelten Linien umfasst, das eine binär gewichtete Ortsfrequenz oder eine pseudozufällig variierende Ortsfrequenz aufweist.

13. System nach einem der vorhergehenden Ansprüche, wobei jede der ersten und zweiten Kamera (36, 38) eine Vielzahl von Zeilen von Pixeln umfasst und jede dazu konfiguriert ist, die Vielzahl von Zeilen aufeinanderfolgend aktiv zu machen, wodurch ein zweidimensionales Bild auf die Art eines rollierenden Verschlusses erstellt wird.

14. System nach einem der vorhergehenden Ansprüche, ferner umfassend ein Cockpit-Benachrichtigungssystem (96), das dazu konfiguriert ist, ein Warnsignal zu erzeugen, falls der berechnete Abstand zu dem Objekt innerhalb einer Kollisionszone oder auf einer Kollisionsflugbahn liegt.

15. System nach Anspruch 14, wobei das Cockpit-Benachrichtigungssystem (96) eine Anzeigevorrichtung beinhaltet, die dazu konfiguriert ist, ein Bild der Szene anzuzeigen, das mit den berechneten Positionswerten und Abstandsdaten beschriftet ist.

## Revendications

1. Système de télémétrie d'un objet dans une scène extérieure à un aéronef, le système comprenant :

un projecteur de lumière (34) configuré pour être monté au niveau d'un emplacement de projecteur sur l'aéronef, et en outre configuré pour projeter une lumière à motifs linéaires dans une direction pouvant être commandée sur la scène extérieure à l'aéronef, éclairant ainsi une partie à motifs linéaires de la scène ;
des première et seconde caméras (36, 38) configurées pour être montées au niveau de premier et second emplacements de caméra distincts sur l'aéronef et alignés de façon à pouvoir capturer simultanément, lorsque la lumière à motifs linéaires est projetée sur la scène, des premier et deuxième vecteurs de données de pixels correspondant à des première et seconde rangées ou à des première et seconde colonnes de pixels actives, respectivement, sur lesquelles la lumière à motifs linéaires projetée par le projecteur de lumière et réfléchie par la scène est focalisée ;
un dispositif de commande (98) configuré pour coordonner la direction pouvant être commandée de la lumière à motifs linéaires projetée de sorte que la partie à motifs linéaires éclairée de la scène est focalisée sur les première et seconde rangées ou sur les première et seconde colonnes de pixels actives ; et
un calculateur de portée (94) configuré pour calculer la portée de l'objet à l'aide de la triangulation sur la base des premier et deuxième vecteurs de données de pixels capturés et des premier et second emplacements de caméra distincts à partir desquels les premier et deuxième vecteurs de données de pixels sont capturés simultanément.

2.  Système selon la revendication 1, comprenant en outre :
un processeur d'image (92) configuré pour identifier les premier et second motifs d'éclairage dans les premier et deuxième vecteurs de données de pixels, respectivement, les premier et second motifs d'éclairage identifiés indiquant une discontinuité de portée entre l'objet dans la scène et un arrière-plan de la scène.

3.  Système selon la revendication 2, dans lequel le processeur d'image (92) est en outre configuré pour déterminer, sur la base des premier et second motifs d'éclairage identifiés, des premières et secondes coordonnées de pixels, respectivement, correspondant à un bord de l'objet dans la scène.

4.  Système selon la revendication 3, dans lequel le calculateur de portée (94) est en outre configuré pour calculer la portée jusqu'à l'objet à l'aide de la triangulation sur la base des premières et secondes coordonnées de pixels déterminées et des premier et second emplacements de caméra distincts à partir desquels les premier et deuxième vecteurs de données de pixels sont capturés simultanément.

5.  Système selon une quelconque revendication précédente, dans lequel l'emplacement de projecteur et les premier et second emplacements de caméra se trouvent le long d'un axe commun.

6.  Système selon la revendication 5, dans lequel la direction pouvant être commandée dans laquelle la lumière à motifs linéaires est projetée est une direction angulaire autour de l'axe commun.

7.  Système selon une quelconque revendication précédente, dans lequel le dispositif de commande (98) est en outre configuré pour coordonner la direction pouvant être commandée de la lumière à motifs linéaires projetée de sorte qu'une séquence temporelle de parties à motifs linéaires éclairées de la scène est focalisée sur une séquence temporelle correspondante de rangées ou de colonnes de pixels actives à la fois des première et seconde caméras (36, 38), respectivement.

8.  Système selon une quelconque revendication précédente, dans lequel le dispositif de commande (98) est en outre configuré pour activer ou inhiber la projection de lumière à motifs linéaires sur la scène extérieure à l'aéronef.

9.  Système selon la revendication 8, dans lequel les caméras (36, 38) sont en outre configurées pour capturer, lorsque la lumière à motifs linéaires sur la scène est inhibée, des troisième et quatrième vecteurs de données de pixels correspondant aux première et seconde rangées ou aux première et seconde colonnes de pixels actives.

10. Système selon la revendication 9, dans lequel le processeur d'image (92) est en outre configuré pour générer des vecteurs de différence sur la base d'une différence entre les premier et deuxième vecteurs et les troisième et quatrième vecteurs.

11. Système selon une quelconque revendication précédente, dans lequel la lumière à motifs linéaires comprend un motif à trait continu.

12. Système selon une quelconque revendication précédente, dans lequel la lumière à motifs linéaires comprend un motif en pointillés ayant une fréquence spatiale pondérée binaire ou une fréquence spatiale variant de manière pseudo-aléatoire.

13. Système selon une quelconque revendication précédente, dans lequel chacune des première et seconde caméras (36, 38) comprend une pluralité de rangées de pixels, et chacune est configurée pour rendre séquentiellement la pluralité de rangées actives, créant ainsi une image bidimensionnelle de type obturateur roulant.

14. Système selon une quelconque revendication précédente, comprenant en outre un système de notification de poste de pilotage (96) configuré pour générer un signal d'alerte si la portée calculée jusqu'à l'objet se trouve dans une zone de collision ou sur une trajectoire de collision.

15. Système selon la revendication 14, dans lequel le système de notification de poste de pilotage (96) comporte un dispositif d'affichage configuré pour afficher une image de la scène annotée avec les valeurs de position et les données de portée calculées.

FIG.1

**FIG.2A**

**FIG.2B**

FIG.3A

FIG.3B

FIG.4

Object

$D_L = D_1 SIN(\Theta_2)$

$D_F = D_1 COS\ \Theta_2$

$D_C \dfrac{SIN(90°-\Theta_2)}{SIN(\Theta_1+\Theta_2)} = D_2$

$D_1 = D_C \dfrac{SIN(90°-\Theta_1)}{SIN(\Theta_1+\Theta_2)}$

$\Theta_1 + \Theta_2$

$\Theta_1$

$\Theta_2$

$90°-\Theta_1$

$90°-\Theta_2$

$D_C$

70

72

74

EP 3 552 973 B1

Perspective View

Calibration Plane

80p  80p  80

Horizontal Line Sweeps Vertically

82

82p

32

36  Camera 1

34  Line Light Source

38  Camera 2

Camera / Light Source

Calibration Plane

Scan Direction

Projector Is Illuminating Sense Area
Both Cameras Capture Image

84  Camera 1 Image

80p  82  80p

82p

86  Camera 2 Image

80p  82  80p

82p

FIG.5

EP 3 552 973 B1

Horizontal Line Sweeps Vertically

Calibration Plane — 80

82 — 82p

36 — 34 — 38a — 38b — 32'

Rolling Shutter Camera 2A

Moving Line Light Source

Rolling Shutter Camera 1

Rolling Shutter Camera 2B

Original Camera Images On All Cameras Pattern Is Projected On A Calibration Plane

Right Side Camera 38a — 86a

82p

Left Side Camera 36 — 84'

82p

Right Side Camera 38b — 86b

82p

FIG.6

EP 3 552 973 B1

Horizontal Line
Sweeps Vertically

Calibration Plane

80

Projector 1 Is Illuminating Sense Area
Camera 2 Is Capturing Image

34a

36a

84"

Line Light Source 1

Camera2

34b

Camera1

36b

Line Light Source 2

FIG.7A

EP 3 552 973 B1

FIG.7B

EP 3 552 973 B1

Vertical Line
Sweeps Horizontally

Calibration Plane

Projector 1 Is Illuminating Sense Area
With Vertical Line
Camera 1 Is Capturing Image

Line Light Source 1

Camera1

Camera2

Line Light Source 2

FIG.7C

Vertical Line
Sweeps Horizontally

Calibration Plane

Projector 2 Is Illuminating Sense Area
With Vertical Line
Camera 2 Is Capturing Image

Camera2

Line Light Source 1

Camera1

Line Light Source 2

FIG.7D

FIG.8

EP 3 552 973 B1

FIG.9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3235735 A1
- US 14489381 B